# EUROPEAN PATENT APPLICATION

(11) **EP 4 712 595 A1**
(43) Date of publication of application: **18.03.2026**
(21) Application number: 23937392.1
(22) Date of filing: 12.05.2023
(51) Int. Cl.: H04W 56/00, H04W 36/08

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/017938
(87) International publication number: WO 2024/236645

(57) **Abstract**

A terminal according to one aspect of the present disclosure includes: a receiving section that receives cell switch indication information indicating switch to a target cell; and a control section that performs, when information about timing advance of the target cell is not included in the cell switch indication information, control to apply at least one of timing advance of the target cell acquired before reception of the cell switch indication information, timing advance acquired after the reception of the cell switch indication information, and timing advance of another cell different from the target cell.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)). In inter-cell mobility, it is assumed that a candidate cell(s) is configured separately from each serving cell to perform switching/switch between the serving cell and the candidate cell.

However, in a case of applying inter-cell mobility (for example, switching between a serving cell and a candidate cell or the like), how to control UL transmission (as an example, control of timing advance and the like) is a problem. When a candidate cell to be a cell switching candidate is configured/supported, and control of timing advance cannot be performed appropriately (for example, when timing advance to be applied cannot be determined appropriately), inter-cell mobility cannot be performed appropriately, which may degrade quality of communication.

The present disclosure has been made in view of this respect, and an object of the present disclosure is to provide a terminal, a radio communication method, and a base station that enable appropriate control of communication even when a candidate cell is configured/supported.

### Solution to Problem

A terminal according to one aspect of the present disclosure includes: a receiving section that receives cell switch indication information indicating switch to a target cell; and a control section that performs, when information about timing advance of the target cell is not included in the cell switch indication information, control to apply at least one of timing advance of the target cell acquired before reception of the cell switch indication information, timing advance acquired after the reception of the cell switch indication information, and timing advance of another cell different from the target cell. Advantageous Effects of Invention

According to one aspect of the present disclosure, even a candidate cell is configured/supported, communication can be controlled appropriately

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of association between serving cells and candidate cells.
[FIG. 3] FIG. 3A is a diagram to show a second example of option 2 of a candidate cell configuration. FIG. 3B is a diagram to show a third example of option 2 of the candidate cell configuration.
[FIG. 4] FIG. 4 is a diagram to show serving cell switch example 1.
[FIG. 5] FIG. 5 is a diagram to show serving cell switch example 2.
[FIG. 6] FIG. 6 is a diagram to show serving cell switch example 3.
[FIG. 7] FIG. 7 is a diagram to show an example of timing advance groups (TAGs) to which cells included in a cell group belong.
[FIG. 8] FIG. 8 is a diagram to show an example of a MAC CE for timing advance command.
[FIG. 9] FIG. 9 is a diagram to show another example of the MAC CE for timing advance command.
[FIG. 10] FIG. 10 is a diagram to show an example of configuration of TAGs when association of TAG IDs with candidate cells is supported.
[FIG. 11] FIG. 11 is a diagram to show an overview of L1L2-triggered mobility (LTM).
[FIG. 12] FIG. 12 is a diagram to show a PDCCH ordered RACH with random access response (RAR) monitoring for a serving cell.
[FIG. 13] FIG. 13 is a diagram to show a PDCCH ordered RACH without random access response (RAR) monitoring for candidate cells.
[FIG. 14] FIG. 14 is a diagram to show DCI format 1_0 CRC-scrambled with a C-RNTI.
[FIG. 15] FIG. 15 is a diagram to show an example of cell switch operation according to a first/second embodiment.
[FIG. 16] FIG. 16A and FIG. 16B are diagrams to each show an example of TA/TAG association/configuration between candidate cells according to the first embodiment.
[FIG. 17] FIG. 17A and FIG. 17B are diagrams to each show another example of TA/TAG association/configuration between candidate cells according to the first embodiment.
[FIG. 18] FIG. 18 is a diagram to show an example of a MAC CE indicating association between candidate cells according to the second embodiment.
[FIG. 19] FIG. 19 is a diagram to show an example of higher layer parameters configuring association between candidate cells according to the second embodiment.
[FIG. 20] FIG. 20 is a diagram to show an example of cell switch operation according to the second embodiment.
[FIG. 21] FIG. 21 is a diagram to show an example of a schematic structure of a radio communication system according to one embodiment.
[FIG. 22] FIG. 22 is a diagram to show an example of a structure of a base station according to one embodiment.
[FIG. 23] FIG. 23 is a diagram to show an example of a structure of a user terminal according to one embodiment.
[FIG. 24] FIG. 24 is a diagram to show an example of a hardware structure of the base station and the user terminal according to one embodiment.
[FIG. 25] FIG. 25 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information about quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information about QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

It is studied that a UE performs UL transmission to one or a plurality of cells/TRPs. As a procedure of this case, scenario 1 or scenario 2 below is conceivable. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI." A non-serving cell, a cell having a different PCI, and an additional cell may be interchangeably interpreted.

### <Scenario 1>

For example, scenario 1 supports multi-TRP inter-cell mobility, but a scenario not supporting the multi-TRP inter-cell mobility may be used.
(1) The UE receives, from the serving cell, a configuration of an SSB for beam measurement of a TRP corresponding to a different PCI from the serving cell and a configuration (including the resource of the different PCI) necessary for using radio resources for data transmission and reception.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

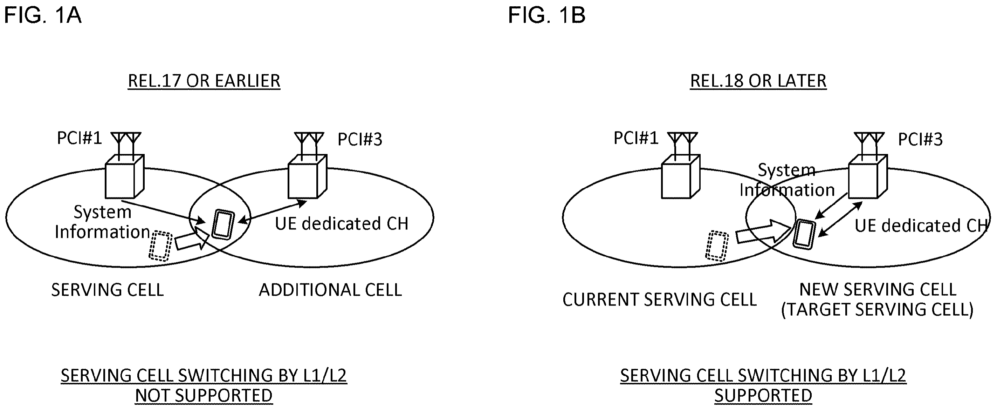

FIG. 1A is a diagram to show an example of movement of a UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel (CH) from the additional cell. Meanwhile, the UE needs to be present within coverage of the serving cell in order to receive a UE common channel (for example, system information/paging/short message). When the UE moves out of coverage of the serving cell, switching of cells (for example, processing such as RRC reconfiguration) is required through handover (also referred to as L3 mobility) or the like.

### <Scenario 2>

In scenario 2, L1/L2 inter-cell mobility (for example, L1L2-triggered mobility (LTM)) is applied. In L1/L2 inter-cell mobility, the serving cell can be changed by using a function such as beam control without performing RRC reconfiguration. In other words, transmission and reception to and from a candidate cell/additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.
(1) The UE receives, from the serving cell (Current serving cell), configuration information (for example, a configuration of an SSB or the like) related to a cell (additional cell/candidate cell/target serving cell) having a different PCI for beam measurement/serving cell change.
(2) The UE performs beam measurement of the cell using the different PCI, and reports measurement results to the serving cell.
(3) The UE may receive a configuration (serving cell/candidate cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of a UE in Rel. 18. In Rel. 18, the serving cell is switched by L1/L2 (for example, DCI/MAC CE). Here, shown is a case of switching from PCI #1 corresponding to a current serving cell (for example, Current serving cell) to PCI #3 corresponding to a candidate cell (for example, Target serving cell) by L1/L2 signaling.

The UE can receive/transmit a common channel (for example, system information/paging/short message)/UE-dedicated channel from/to a new serving cell (target serving cell #3). In response to this, the UE may move out from the coverage of serving cell PCI #1 before the switch.

### (Configuration of Plurality of Candidate Cells)

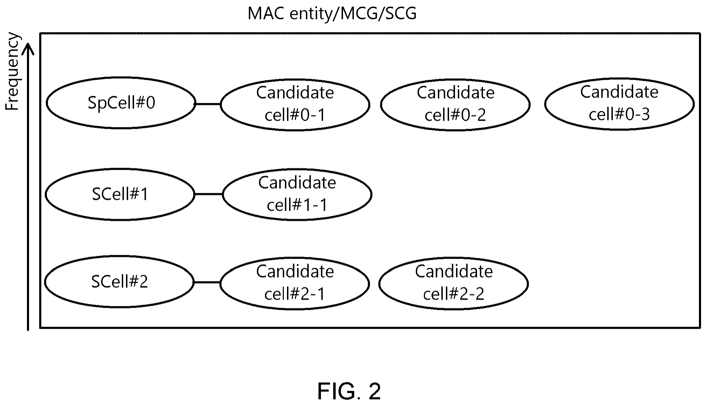

FIG. 2 is a diagram to show an example of association between serving cells and candidate cells. SpCell #0, SCell #1, or SCell #2 is assumed as a serving cell (for example, a current serving cell/candidate cell to be a serving cell). Note that an SpCell means a special cell (including a primary cell (PCell) and a primary secondary cell (PSCell)). An SCell means a secondary cell.

A candidate cell(s) (for example, a target serving cell/candidate cell not being a current serving cell) may be associated with each SpCell/SCell. In FIG. 2, SpCell #0 is associated with candidate cell #0-1, candidate cell #0-2, and candidate cell #0-3. SCell #1 is associated with candidate cell #1-1. SCell #2 is associated with candidate cells #2-1 and 2-2. As described above, one or more candidate cells (for example, a target serving cell(s)/candidate cell(s) not being a current serving cell) may be associated with each serving cell.

Alternatively, a candidate cell(s) need not be clearly associated with each serving cell.

For a configuration of a candidate cell(s) to be a candidate(s) in a case of changing a serving cell, options 1 and 2 below are conceivable, for example.

### <Option 1>

As in Rel-17 inter-cell mobility, information in ServingCellConfig may include information about a plurality of candidate cells. In this case, the plurality of candidate cells need share the same configuration of a PDCCH/PDSCH/UL or the like as that of a serving cell.

For example, in Rel-17 inter-cell mobility, "mimoParam-r17" is added under ServingCellConfig, and PCI configuration information is added. mimoParam-r17 may include additionalPCI-ToAddModList-r17, which is an information list of additional SSBs each having a PCI different from the PCI of the serving cell. The same configuration as that of the serving cell may be applied to the candidate cells (additional cells, cells having additionalPCI), except for part of information.

### <Option 2>

A complete configuration (for example, ServingCellConfig) corresponding to each cell may be applied to a plurality of candidate cells. In other words, another configuration (for example, another higher layer parameter) may be applied to the candidate cells without configuration information being shared with a serving cell. Since the complete configuration of each candidate cell is provided, a UE can perform appropriate communication with the candidate cell.

For example, the plurality of candidate cells may be associated with serving cells by reusing a carrier aggregation (CA) configuration framework. In the CA configuration framework, an SpCell can be configured for each cell group, and a plurality of SCells can be added. For example, a serving cell may be configured, and a plurality of candidate cells may be configured, for each cell group of L1/L2 inter-cell mobility. Each candidate cell may be activated/deactivated by a MAC CE. TCI information corresponding to each candidate cell may be activated/deactivated by a MAC CE, to activate/deactivate the candidate cell. This method is considered to be useful to reduce complexity of UE operation.

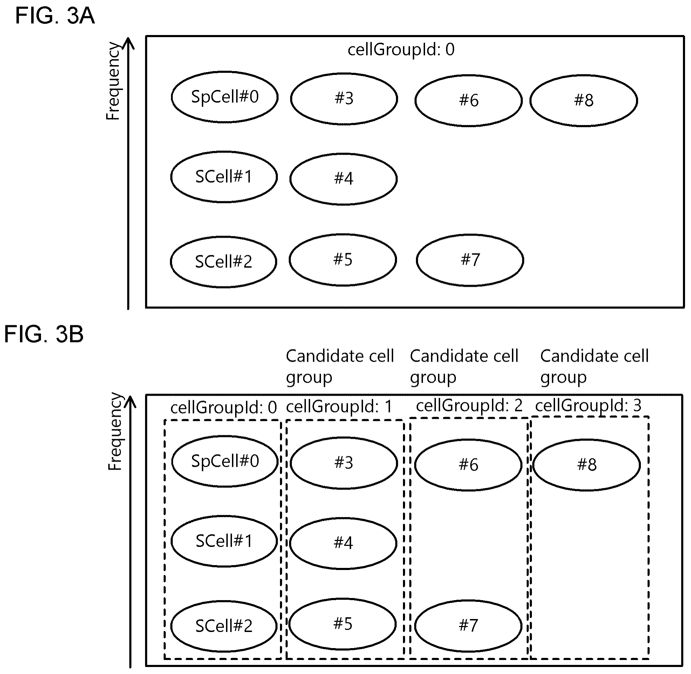

FIG. 3A is a diagram to show a first example of option 2 of the candidate cell configuration. In the example in FIG. 3A, a common candidate cell pool for cell switch in an MCG/SCG is applied to the candidate cells. In other words, the candidate cells are treated as one pool (group) irrespective of a frequency band.

FIG. 3B is a diagram to show a second example of option 2 of the candidate cell configuration. In the example in FIG. 3B, a plurality of cell groups are configured, and cell group switch is possible by L1/L2 signaling. A candidate cell(s) is configured for each cell group, and the configuration of each group includes index (indices) of a corresponding one of an SpCell and an SCell.

### (Signaling for Serving Cell Change Indication)

At least one of implicit signaling and explicit signaling may be used for serving cell change indication.

### {Aspect 1}

In aspect 1, implicit signaling for serving cell change indication will be described.

### {{Option 1-1}}

When a specific control resource set (CORESET) (for example, at least one of CORESET #0, a CH5 Type0-CSS CORESET, and CH6/CH7/CH8 CSS CORESET) is indicated (activated) by a MAC CE together with one or more TCI states associated with a cell having a PCI different from the PCI of the serving cell (when one or more TCI states associated with the cell of a PCI different from the PCI of the serving cell is indicated/activated for the specific CORESET by a MAC CE), a UE may determine to change the serving cell to another cell (cell x, cell having a different PCI). In other words, this activation may implicitly indicate change of the serving cell to the other cell.

In this case, the UE may update another CORESET ID, another CORESET using CH6/CH7/CH8, or a beam of another CORESET using a CSS, to have the same TCI state as the activated TCI state.

### {{Option 1-2}}

At the time when a MAC CE activates/deactivates a TCI state(s) of a PDSCH, when all the TCI states activated by a MAC CE are associated with the same cell x having a PCI different from the PCI of the serving cell, a UE may determine to change the serving cell to another cell (cell x). In other words, this association may implicitly indicate change of the serving cell to the other cell.

In a case to which this option is applied, in a case where an NW (base station) does not change the serving cell, when a MAC CE activates a TCI state(s) of a PDSCH associated with a cell having a different PCI, a TCI state(s) related to another cell (for example, a current serving cell or a cell having a second different PCI) need also be included.

### {{Option 1-3}}

When a MAC CE activates/deactivates a unified TCI state(s) (corresponding to a Rel-17 unified TCI state framework, for example), and all the activated unified TCI states are associated with the same cell x having a different PCI, a UE may determine to change the serving cell to another cell (cell x). In other words, this association may implicitly indicate change of the serving cell to the other cell.

### {Aspect 2}

In aspect 2, explicit signaling for serving cell change indication will be described. In aspect 2, scenario 2 described above is applied, for example.

### {{Option 2-1}}

An example of serving cell change indication will be described below. Note that activation/deactivation of a non-serving cell, change of a serving cell, and transmission/reception of another cell (non-serving cell) having a physical cell ID different from the physical cell ID of a serving cell may be interchangeably interpreted.

A UE may receive a new MAC CE including at least one of fields (pieces of information) indicating (1) to (3) below corresponding to a non-serving cell, to be used for activation/deactivation of a non-serving cell. When the UE receives the MAC CE, the UE may determine to change a serving cell to another cell (non-serving cell). The UE may control transmission and reception of a DL signal/UL signal to and from the non-serving cell, based on the information. Note that the number of non-serving cells may be one or more than one. In an example described below, a MAC CE including a plurality of fields indicating a plurality of non-serving cell indices is applied.
(1) Serving cell ID.
(2) BWP ID.
(3) Non-serving cell ID to be used for activation. The non-serving cell ID may be replaced with any information corresponding to a corresponding non-serving cell (that can identify the non-serving cell).

As an example of (3), any of (3-1) to (3-5) may be applied, for example.
(3-1) PCI (PCI to be used directly). For example, 10 bits are used.
(3-2) Re-indexed index (new ID) of the non-serving cell. The new ID may be associated with part of a PCI to be configured only for a serving cell and a non-serving cell to be used (usable) by the UE. The new ID can reduce the number of bits compared to that of PCI.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/non-activation of each non-serving cell. The size of a bitmap (number of bits) may be the same as the number of non-serving cells configured in this CC. For example, when the second non-serving cell among three non-serving cells is activated, "010" is configured.

At least one of pieces of information included in a MAC CE may be included in DCI. Alternatively, at least one of serving cells activated by a MAC CE may be indicated by DCI. To be able to recognize a DL beam monitored by a UE in a target cell (serving cell after change), a MAC CE/DCI may include a field indicating a TCI state/SSB/CSI-RS from a cell having a different PCI. A UE may use the TCI state/SSB/CSI-RS to create and transmit a beam report (CSI report).

### {{Option 2-2}}

A UE may receive a MAC CE obtained by adding a new 1-bit field "C" to an existing MAC CE. The field indicates whether to perform change of a serving cell. When the UE receives the MAC CE, the UE may determine to change a serving cell to another cell, based on the field.

### {{Option 2-3}}

A field indicating a serving cell index/PCI/another ID (such as a new ID in option 2-1 described above) and a field of a TCI state/SSB/CSI-RS of a target cell (serving cell after change) may be further included in a MAC CE in option 2-2.

As described above, since indication for serving cell change indication is indicated by a MAC CE/DCI, a UE can appropriately perform change of a serving cell.

### {Serving Cell Switch Example 1}

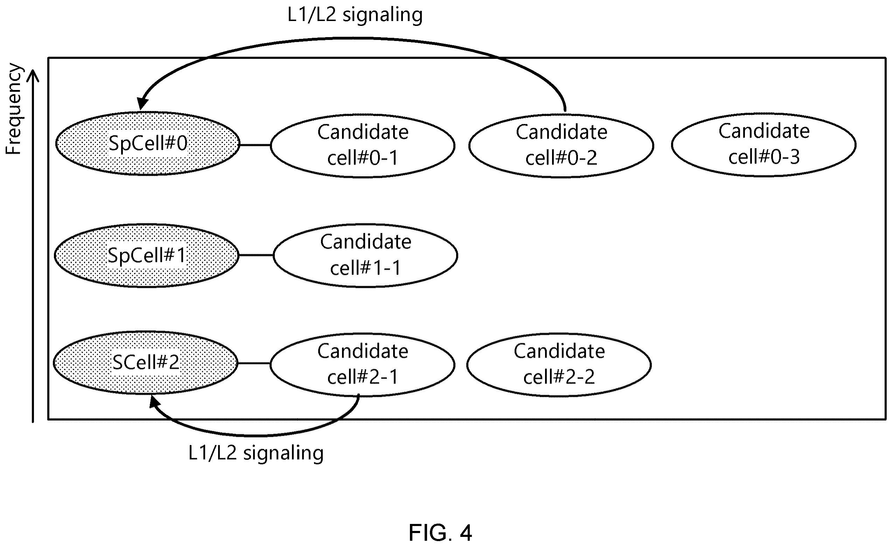

FIG. 4 is a diagram to show serving cell switch example 1. FIG. 4 shows a case where candidate cells are associated with serving cells.

For example, in serving cell SpCell #0 in an MCG/SCG, when change of candidate cell #0-2 to a serving cell (for example, an SpCell) is indicated by L1/L2 signaling, candidate cell #0-2 turns to be a new serving cell SpCell. In other words, switch of serving cell SpCell #0 and candidate cell #0-2 is performed.

In serving cell SCell #2 in the MCG/SCG, when change of candidate cell #2-1 to a serving cell (for example, an SCell) is indicated by L1/L2 signaling, candidate cell #2-1 turns to be a new serving cell SCell. In other words, switch of serving cell SCell #2 and candidate cell #2-1 is performed.

### {Serving Cell Switch Example 2}

RRC/MAC CE can configure a global candidate cell ID (cells #0, ..., 8) for each cell group, band, FR, or UE. A UE may be indicated with switch of a serving cell by the global candidate cell ID.

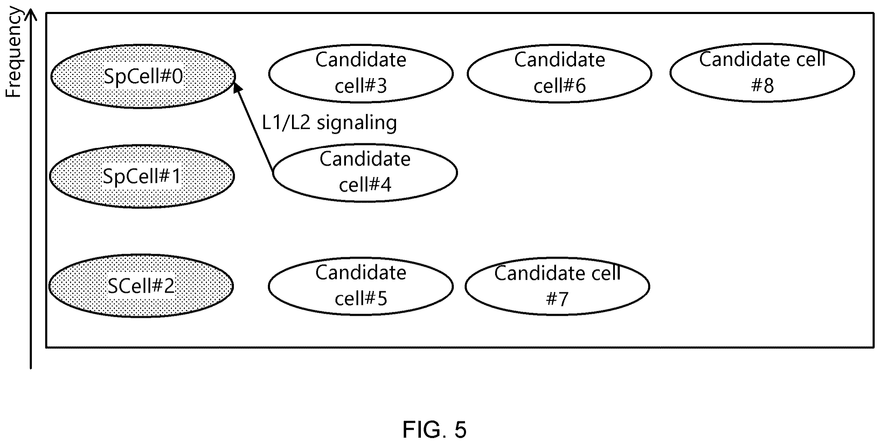

FIG. 5 is a diagram to show serving cell switch example 2. Similarly to FIG. 3A, a pool of a plurality of candidate cells is configured, and thereby a serving cell can be switched to any (activated) candidate cell in the pool in L1/L2 signaling. In this case, a configured candidate cell can be any of an SpCell and an SCell, based on L1/L2 signaling.

For example, in serving cell SpCell #0 in an MCG/SCG, when change of candidate cell #4 to a serving cell (for example, an SpCell) is indicated by L1/L2 signaling, candidate cell #4 turns to be a new serving cell SpCell. In other words, switch of serving cell SpCell #0 and candidate cell #4 is performed.

The UE may receive indication of change of a serving cell (here, switch between serving cell SPCell #0 and candidate cell #4) by a MAC CE/DCI. The UE may then determine that indicated candidate cell #4 is to be a new cell group SpCell.

### {Serving Cell Switch Example 3}

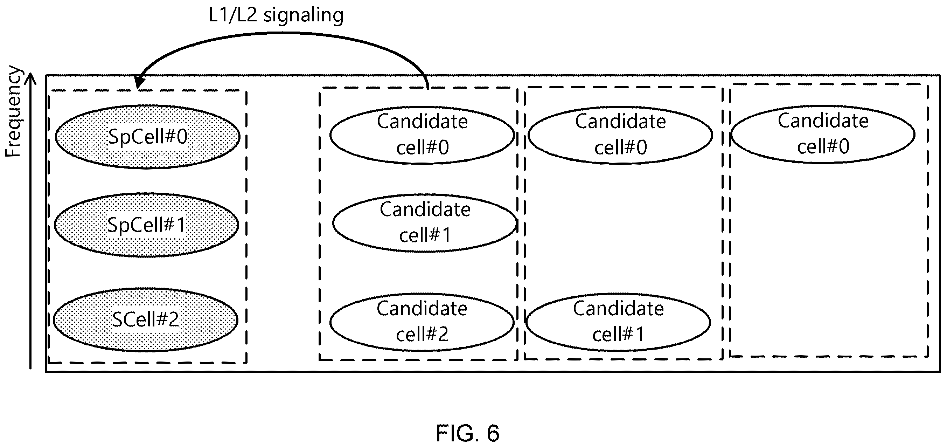

FIG. 6 is a diagram to show serving cell switch example 3. Here, shown is a case where switch of cell groups by L1/L2 signaling is indicated.

A UE receives indication of change of a serving cell (here, switch between a cell group including SpCell #0/#1/#2 and a cell group including candidate cell #0/#1/#2) by a MAC CE/DCI. Then, a certain cell (here, candidate cell #0) included in a switch-destination cell group turns to be a serving cell SpCell. Here, shown is a case where the certain cell is a candidate cell corresponding to the same frequency as that of the SpCell, but this is not restrictive. The certain cell may be indicated.

Candidate cells (here, candidate cell #1, candidate cell #2) included in the same cell group as that of candidate cell #0 turn to be SCells. In other words, the serving cell group and the candidate cell group are switched by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

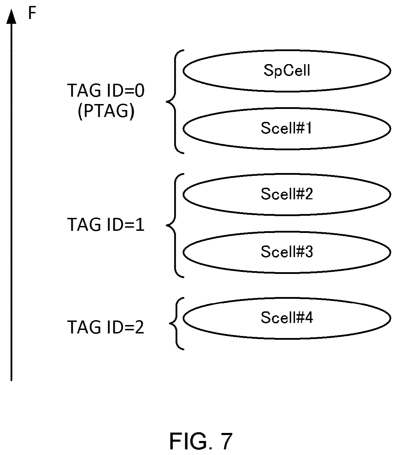

In existing systems (for example, Rel-16 NR), configuration of four TAGs at maximum (for example, MCG/SCG) is supported for each cell group (see FIG. 7). FIG. 7 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command (TAC) is signaled from a radio base station to the UE on a MAC layer. The UE controls a certain timer (for example, a TA timer), based on reception of the TA command.

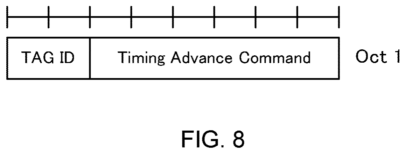

A MAC CE for timing advance command may have a structure including a field for timing advance group index (for example, TAG ID) and a field for timing advance command (see FIG. 8). The MAC CE may be constituted of 1 octet (= 8 bits).

A field of a TAG ID (TAG ID field) may be constituted of 2 bits, for example. The TAG ID field may be used for indication of the TAG ID of an addressed TAG. A field of a timing advance command (TAC field) may be constituted of 6 bits, for example. The TAC field may indicate an index value T_{A} (0, 1, 2, ..., 63) to be used for control of the amount/value (relative amount/relative value) of timing adjustment to be applied by a MAC entity. A MAC CE for timing advance command shown in FIG. 8 may be referred to as a TAC MAC CE.

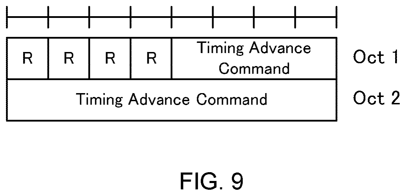

FIG. 9 is a diagram to show another example of the MAC CE for timing advance command. The MAC CE shown in FIG. 9 may be referred to as an absolute TAC MAC CE. The MAC CE may be constituted of 2 octets (= 16 bits). Concretely, the MAC CE may include fields for reserved bit (R-bit fields) and a field for timing advance command (TAC field). The R-bit fields (R = 0) may be constituted of 4 bits, for example. The TAC field may be constituted of 12 bits across 2 octets, for example. The TAC field in FIG. 9 may indicate an index value to be used for control of the actual amount/value (absolute amount/absolute value) of TA to be applied by a MAC entity, similarly to FIG. 8. The absolute TAC MAC CE need not include a TAG ID field shown in FIG. 8.

The MAC CE shown in FIG. 8 may be used after initial access is established. In contrast, the MAC CE shown in FIG. 9 may be used only at the time of initial access and may be included in a RAR or the like. Each field included in the MAC CE for timing advance command described above may be referred to as a field related to TA. The TAC field shown in FIG. 8 among the fields may be referred to as a TA adjustment field/field for indicating TA adjustment/field related to TA adjustment. The TAC field shown in FIG. 9 may be referred to as an absolute TAC field/field for indicating an absolute TAC.

### (Control of UL Transmission Based on Timing Advance)

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a certain cell (or CC). Alternatively, a case is assumed that different TRPs corresponding to a certain cell share a common TAG.

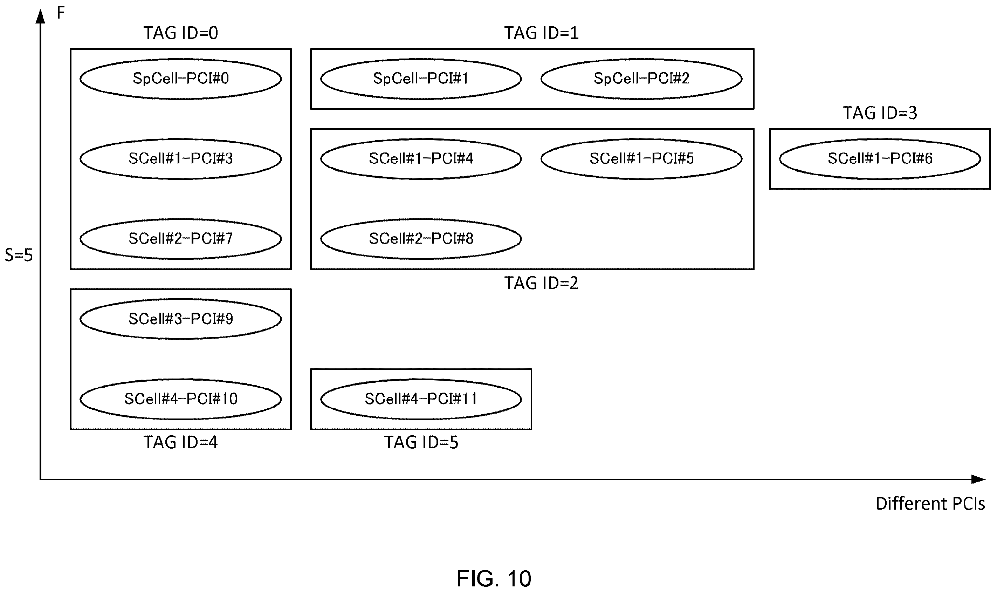

FIG. 10 is a diagram to show an example of configuration of TAGs each being for a plurality of cells (or TRPs) having different PCIs.

It is also assumed that M PCIs (for example, a serving cell + candidate cells associated with the serving cell) is configurable at maximum per CC and that configuration of N TAG(s) (for example, N ≤ M) at maximum is supported for the maximum M PCIs. In this case, one or a plurality of PCIs may be associated with one TAG.

For up to S serving cell(s) (or for S serving cell(s) at maximum) in a cell group, one or a plurality of PCIs may be associated with one TAG. In this case, T TAG(s) at maximum may be configured in consideration of one PCI per CC (case 1). In other words, (T × N) TAG(s) at maximum may be configured for the max (M × S) cells. Alternatively, up to U TAG(s) at maximum may be configured for the max (M × S) cells (case 2).

As described above, when candidate cells are configured/applied/supported, it is assumed that different serving cells/different candidate cells are associated with the same TAG. The TAG of a candidate cell may be indicated by a base station or may be determined based on the acquired TA of a candidate cell, by a UE.

It is conceivable that, for UL transmission in a candidate cell, the UE performs UL transmission in consideration of TA corresponding to the candidate cell. To consider the TA of a candidate cell, the UE need perform TA acquisition of candidate cells.

As TA acquisition of candidate cells, a plurality of TA acquisition methods are conceivable such as TA acquisition using a RACH (for example, RACH-based solutions) and TA acquisition not using a RACH (RACH-less solutions). For TA acquisition using a RACH, a method with RAR monitoring and a method without RAR monitoring may be supported. A TA acquisition method may be interpreted as a TA acquisition scheme, a TA acquisition type, or a TA acquisition procedure. In the present disclosure, TA acquisition, TA measurement, TA calculation, TA computation, and TA determination may be interchangeably interpreted.

For example, the UE may transmit a RACH ordered/triggered by a PDCCH (for example, a PDCCH ordered RACH) to each candidate cell, to acquire the TA of the candidate cell. Information about the TA (for example, the TA value) of the candidate cell may be included in a response signal (for example, a RAR) for the RACH. The RAR may be transmitted from the serving cell or may be transmitted from the candidate cell. Alternatively, the UE may use a triggered RACH or a RACH triggered in a higher layer by a network, to acquire the TA of the candidate cell. The PDCCH order may be triggered only by a source cell (or the serving cell).

Alternatively, the UE may transmit a signal other than a RACH to each candidate cell, to acquire the TA of the candidate cell. Information about the TA (for example, the TA value) of the candidate cell may be indicated to the UE by the base station. As the signal other than a RACH, an SRS may be applied (SRS based TA measurement), for example.

Alternatively, the UE may measure/calculate/acquire TA for the candidate cell, based on a DL signal (for example, a downlink reference signal) transmitted from each cell (for example, the candidate cell/serving cell). A method in which the UE acquires TA for a candidate cell, based on a DL signal transmitted from one or more cells, may be referred to as UE based TA measurement.

In UE based TA measurement, a downlink reference signal may be a certain DL signal (for example, a synchronization signal block (for example, an SSB)/CSI-RS, or the like). For example, the UE may measure the difference between reception timings of DL signals from a plurality of cells (or two cells), to acquire TA of a candidate cell.

The plurality of cells may include a cell to be a reference (for example, a serving cell). In this case, the UE may calculate TA necessary for a candidate cell, based on reception timing of the reference cell (and the TA value of the reference cell) and the timing difference (for example, T) between the reference cell and the candidate cell. The UE may use a timing advance command (TAC) transmitted from the serving cell, to acquire TA of the candidate cell.

### (Maintenance of Upring Time Alignment)

In order to maintain/perform maintenance of UL time alignment, a parameter such as a time alignment timer (for example, timeAlignmentTimer) may be configured. The time alignment timer (for each TAG) may control time in which a MAC entity considers that a serving cell belonging to an associated TAG is UL time aligned.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When the MAC entity receives a MAC CE for timing advance command, and a certain value (N_{TA}) is maintained for the indicated TAG, the MAC entity applies the timing advance command to the indicated TAG or starts or restarts the time alignment timer related to the indicated TAG. The certain value (N_{TA}) may be timing advance between DL and UL.

When a timing advance command is received in a RAR message for a serving cell belonging to a TAG (for example, the TAG of an SpCell) or a message B (for example, a MSGB) for the SpCell, and the MAC entity does not select a random access preamble from collision-based random access preambles, the MAC entity may apply the timing advance command to the TAG or start or restart the time alignment timer related to the TAG.

When an absolute timing advance command is received in response to transmission of a message A (for example, a MSGA) including a certain RNTI MAC CE (for example, a C-RNTI MAC CE), the MAC entity may apply the timing advance command of a PTAG.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

### (Overview of L1L2-triggered Mobility (LTM))

In L1L2-triggered mobility (LTM) supported in Rel. 18 or later versions, L1 inter-frequency measurement may be supported. DL synchronization/UL synchronization of a candidate cell, at least based on an SSB, before a cell switch command may be supported.

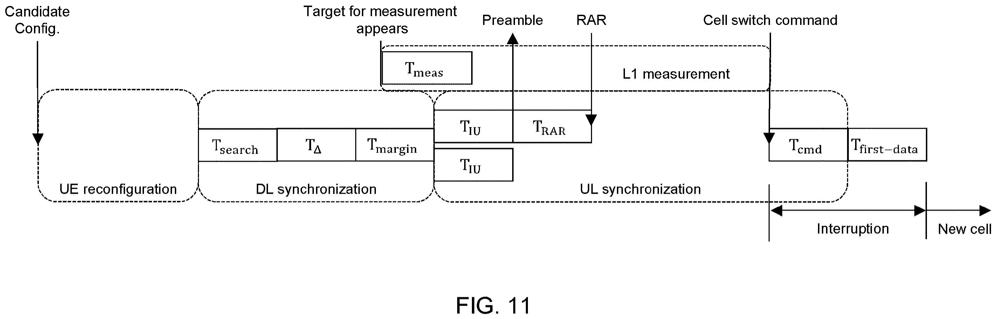

FIG. 11 is a diagram to show an overview of L1L2-triggered mobility (LTM). LTM and L1/L2 inter-cell mobility may be interchangeably interpreted.

At the time of UE reconfiguration, a UE receives candidate cell configurations from an NW. The UE reconfiguration includes T_{RRC} and T_{proccessing1/Tproccessing2}. T_{RRC} (for example, 10 ms at maximum) denotes a processing time for RRC reconfiguration transmitting candidate cell configurations (candidate configurations). T_{proccessing1/Tproccessing2} (for example, 20 ms at maximum for the same FR, 40 ms at maximum for different FRs) denotes times for UE processing before and UE processing after a cell switch command. This includes L2/3 reconfiguration, RF re-tuning, baseband re-tuning, security update if necessary, or the like in some cases.

DL synchronization includes T_{search}, T_{Δ}, and T_{margin}. T_{search} (for example, 0 ms when a cell is known, 60 ms at maximum when a cell is unknown) denotes a time required for searching for a target cell. T_{Δ} denotes a time for detailed tracking and acquisition of all the pieces of timing information (the timing information). T_{margin} (for example, 2 ms at maximum) denotes a time for post-processing of an SSB and a CSI-RS.

L1 mesurement includes Tₘₑₐₛ (SMTC periodicity (for example, 20 ms)). Tₘₑₐₛ denotes measurement delay from appearance of a target to a cell switch command.

UL synchronization includes T_{IU}, T_{RAR}, and T_{cmd}. T_{IU} (for example, 15 ms at maximum) denotes a time of uncertain interruption at the time of obtaining the first available PRACH occasion in a new cell. T_{RAR} (for example, 4 ms at maximum) denotes a time for RAR delay. T_{cmd} (for example, 5 ms at maximum) denotes a processing time for L1/L2 command (HARQ and paging).

T_{first-data} after T_{cmd} denotes a time for the UE to perform first DL reception/UL transmission in an indication beam of the target cell after the RAR.

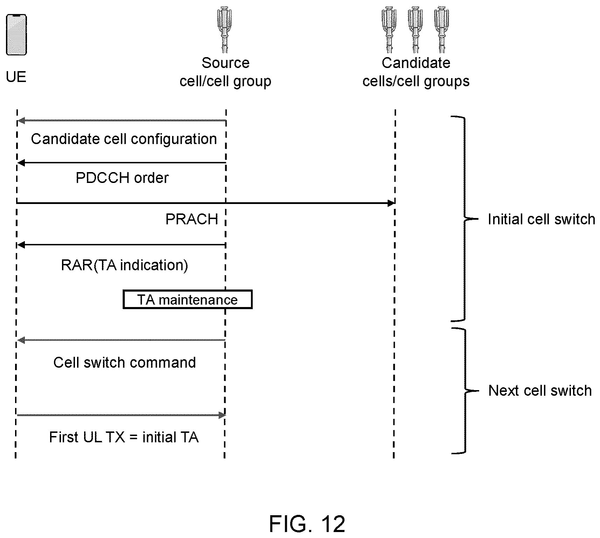

FIG. 12 is a diagram to show an example of a PDCCH ordered RACH with RAR monitoring. Note that, in the present disclosure, a source cell and a source cell group may be interchangeably interpreted. A candidate cell and a candidate cell group may be interchangeably interpreted.

A source cell may transmit information about a candidate cell configuration (for example, candidate cell configuration information) to a UE. The source cell may transmit a PDCCH order (for example, DCI format 1_0) to be used for triggering a PRACH to the UE. A candidate cell (for example, one candidate cell)/random access occasion (RO) targeted for a PRACH trigger/transmission may be indicated by a PDCCH order (or DCI). The UE transmits a PRACH in a RACH procedure to the candidate cell, based on the PDCCH order, for TAG/TA acquisition.

Next, the source cell transmits a response signal (RAR) for the PRACH to the UE. The RAR may include information about TA (for example, TA indication). The RAR (for example, a PDSCH including the RAR/PDCCH scheduling the PDSCH) may be monitored in a specific search space (for example, a common search space (CSS)) of a specific cell (for example, an SpCell) among the current serving cells (only in a Distributed Unit (DU)). Then, in the source cell, TA adjustment (for example, TA maintenance) is performed.

Next, the source cell may transmit a cell switch command to the UE. TA information may be moved from the source cell to a target cell/the source cell may notify the target cell of the TA information. The UE may control UL transmission, based on the acquired TA, after cell switch. For example, when UL synchronization of all the candidate cells is not completed after the initial cell switch, the UE may perform first UL transmission by using initial TA.

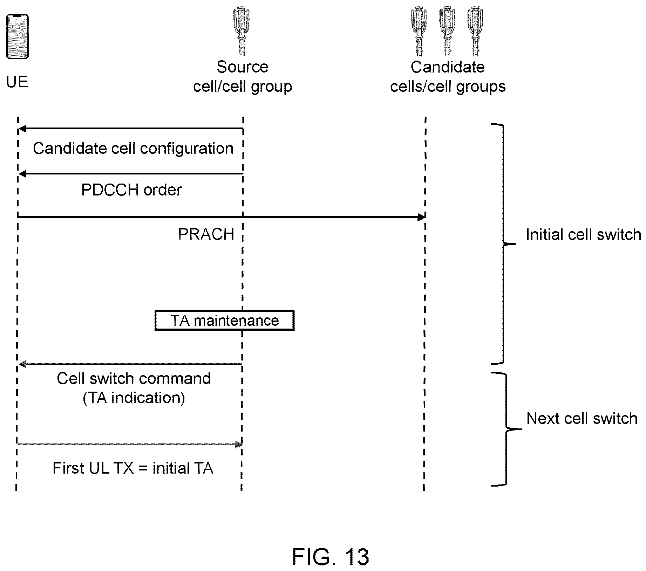

FIG. 13 is a diagram to show an example of a PDCCH ordered RACH without RAR monitoring. For FIG. 13, only respects different from FIG. 12 will be described.

In the example in FIG. 13, one or more candidate cells (for example, a plurality of candidate cells)/random access occasions targeted for a PRACH trigger/transmission may be indicated by a PDCCH order to be used for triggering of a PRAH. A UE may transmit a PRACH in a RACH procedure to the candidate cells, based on the PDCCH order, for acquisition of a plurality of TAGs/TAs. The source cell does not transmit a response signal (for example, a RAR) for the PRACH. The source cell may indicate information about TAs (for example, TA indication) to the UE by using a cell switch command.

In the present disclosure, a RACH without RAR and a RACH without RAR monitoring may be interchangeably interpreted. A RACH may be interpreted as PRACH transmission triggered by a PDCCH order. A RACH procedure/PRACH transmission without RAR monitoring may be interpreted as a RACH procedure/PRACH transmission with no need of RAR monitoring or a RACH procedure/PRACH transmission for which RAR monitoring is not required.

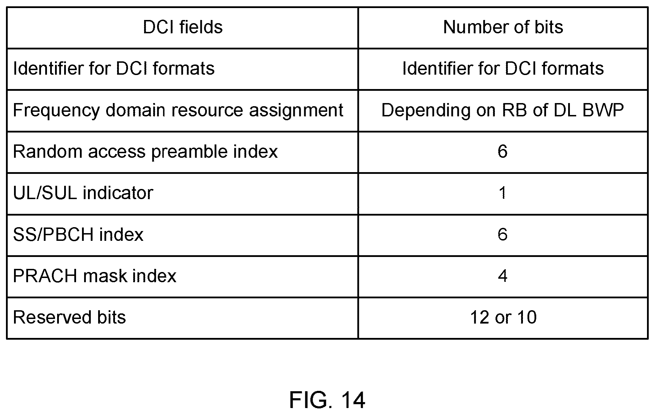

FIG. 14 is a diagram to show DCI format 1_0 CRC-scrambled with a C-RNTI. Frequency domain resource assignment may be used for a PDCCH ordered RACH (PDCCH order), for example. For example, when Frequency domain resource assignment indicates all 1, this may mean that DCI format 1_0 is used as a PDCCH order.

A random access preamble index may be used for Contention based Random Access (CBRA). For example, when a Random access preamble index corresponds to all 0, this may mean that the Random access preamble index is used for CBRA. Reserved bits are 12 bits when operation is performed in a cell with spectrum shared channel access, and are 10 bits otherwise.

In this way, in L1/L2-based mobility (for example, LTM) supported in Rel. 18 or later versions, TA acquisition of candidate cells before cell switch command may be supported. In a mechanism of the TA acquisition of candidate cells, at least a PDCCH ordered RACH may be supported (may be difference automatic). A PDCCH order may triggered only by a source cell (for example, a serving cell). A candidate cell/RACH occasion (RO) of a candidate cell may be indicated by DCI transmitted in the PDCCH order. A configuration of a RACH resource of a candidate cell may be provided to a UE before a PDCCH order.

In a PDCCH ordered RACH, at least one of a method with RAR monitoring and a method without RAR monitoring may be applied. When the method with RAR monitoring is applied, information about timing advance (for example, TA information/TAC) of a candidate cell may be included in a RAR to be indicated to the UE. When the method without RAR monitoring is applied, information about timing advance (for example, TA information/TAC) of a candidate cell may be included in a cell switch command to be indicated to the UE.

### (Analysis)

As described above, in L1/L2 mobility (for example, LTM) in Rel. 18 or later versions, cell switch is controlled based on cell switch indication (for example, a cell switch command MAC CE). In this case, a case of not including information about timing advance (for example, TA information/TAC/TAC field) in the cell switch indication (for example, the cell switch command MAC CE) is also assumed. In such a case, how to control application of timing advance to a candidate cell is a problem.

Thus, the inventors of the present invention studied application of TA to a candidate cell when information about timing advance (for example, TA information/TAC) is not included in cell switch indication, and came up with an aspect of the present embodiment.

In L1/L2 mobility (for example, LTM) in Rel. 18 or later versions, a case where association of timing advance (TA)/TAG between candidate cells is configured is also assumed. In this case, how to perform association of TA/TAG between candidate cells (for example, indication/configuration of association of TA/TAG between candidate cells, TA application based on the association, and the like) is a problem.

For example, when a UE applies acquired TA to a candidate cell (for example, a cell switch command MAC CE) (switch destination candidate cell)/current serving cell other than a target cell indicated with cell switch indication, how to indicate/configure association between the target cell indicated/configured by the MAC CE/RRC and the candidate cell/current serving cell is not clear.

Thus, the inventors of the present invention studied association of TA/TAG between candidate cells (for example, between a target cell and a candidate cell/current serving cell) and came up with the idea of another aspect of the present embodiment.

Embodiments according to the present disclosure will be described in detail with reference to the drawings as follows. Note that the embodiments/aspects (for example, cases) below may each be employed individually, or may be employed in combination of at least two.

### (Various Interpretations and the like)

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the following embodiments, a "plurality of" and "two" may be interchangeably interpreted. A "TAG" and a "TAG ID" may be interchangeably interpreted. A "cell," a "CC," and a "carrier" may be interchangeably interpreted. In the following embodiments, "calculation," "computation," and "acquisition" may be interchangeably interpreted.

The following description may be applied in inter-cell mobility (for example, L1/L2 inter cell mobility) or may be applied in communication control other than inter-cell mobility. L1/L2 inter-cell mobility may be interpreted as at least one of cell switching, cell switch, and cell change.

In the following embodiments, a candidate cell index, a candidate configuration index (candidate config index) may be interchangeably interpreted. A TAG may be interpreted as a PTAG or an STAG. A timer associated with a corresponding candidate cell index may be interpreted as a timer of a TAG associated with a corresponding candidate cell index. A serving cell may be interpreted as a special cell (for example, an SPCell). A candidate cell may include a current serving cell. A target cell may be interpreted as a candidate cell/SpCell. TA may be interpreted as a TAG/TAC. A target cell index may be indicated by a cell switch command MAC CE.

### (Radio Communication Method)

### <First Embodiment>

A first embodiment relates to UE operation for a case of not including information about timing advance (for example, TA information/TAC/TAC field) in cell switch indication (for example, a cell switch command MAC CE).

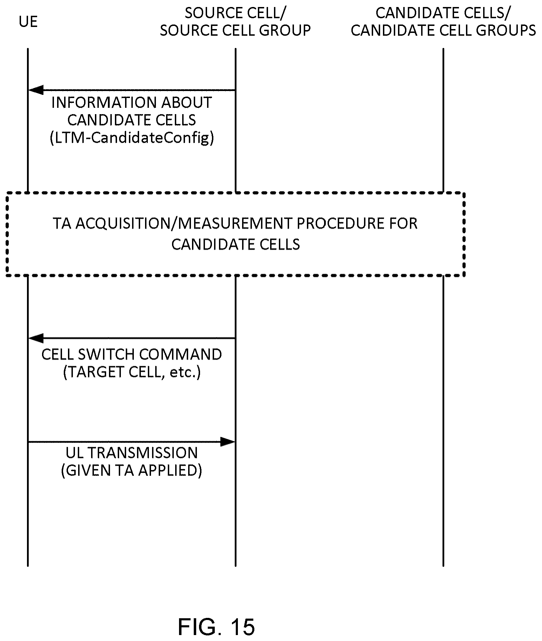

FIG. 15 is a diagram to show an example of L1/L2 based cell switch operation. Note that the operation shown in FIG. 15 is an example, and the present embodiment is not limited to this.

A source cell may transmit information about a candidate cell configuration (for example, candidate cell configuration information) to a UE. The information about a candidate cell configuration may be configured by a certain higher layer parameter (for example, LTM-CandidateConfig). The information about a candidate cell configuration may include information (for example, candidate cell IDs or the like) about association between candidate cells (for example, association about TA/TAG between a plurality of candidate cells).

A UE/network (for example, a base station) may trigger/perform a TA acquisition/measurement procedure for candidate cells. To the TA acquisition/measurement procedure for candidate cells, at least one of a PDCCH ordered RACH procedure (with RAR monitoring), a PDCCH ordered RACH procedure (without RAR monitoring), and UE based TA measurement may be applied, or another method may be applied.

A UE/network (for example, a base station) may acquire (or calculate/compute) a TA(s) of one or a plurality of candidate cells by the TA acquisition/measurement procedure for candidate cells. The candidate cell(s) may be at least one of a non-serving cell and a current serving cell.

The UE receives cell switch indication (cell switch command MAC CE) indicating switch from a source cell (or the current serving cell) to a target cell. When no information about timing advance is included/present in the received cell switch indication (for example, the cell switch command MAC CE), the UE may apply at least one of option 1-1 to option 1-6 below (individually or in combination). The information about timing advance may be information about timing advance of a target cell or a TAC field.

### {Option 1-1}

The UE may apply the TA of the target cell stored/maintained in the UE. The TA of the target cell stored/maintained in the UE may be TA acquired by a RACH procedure/UE based TA measurement or the like before reception of the cell switch indication. The RACH procedure may be a PDCCH ordered RACH used for the TA acquisition or may be a RACH supported by an existing system (for example, a legacy RACH).

As described above, in a case of not including information about timing advance in cell switch indication, when the UE has a TA of a target cell acquired before the cell switch indication (or has the TA being stored/maintained), the UE may apply the TA.

### {Option 1-2}

The UE may trigger/execute TA acquisition/measurement for a target cell. A TA acquisition/measurement method for a target cell triggered/executed by the UE may be a TA acquisition/measurement method configured by a higher layer parameter, a TA acquisition/measurement method defined in a specification, or a TA acquisition/measurement method reported as UE capability information.

The UE may request the TA acquisition/measurement for a target cell from a network (for example, a base station) by using uplink control information (for example, UCI)/MAC CE/PRACH. The PRACH may be triggered by a cell switch command. For example, when the UE has no stored/maintained TA of the target cell, a RACH procedure to be used for TA acquisition may be triggered by the cell switch command.

Option 1-2 may be applied to a case where, at the time of receiving cell switch indication not including information about timing advance of a target cell, the UE has no stored/maintained TA of a target cell. Option 1-2 may be applied in combination with option 1-1. For example, when the UE receives cell switch indication not including information about timing advance of a target cell, the UE may apply option 1-1 when having a stored/maintained TA of the target cell while applying option 1-2 when having no stored/maintained TA of the target cell.

### {Option 1-3}

The UE may apply a certain value or a TA of a serving cell (for example, a current serving cell or a switch-source serving cell) to a TA of a target cell. The certain value may be a fixed value (for example, 0) defined in advance or may be a value configured/indicated by RRC/MAC CE.

Option 1-3 may be applied to a case where, at the time of receiving cell switch indication not including information about timing advance of a target cell, the UE has no stored/maintained TA of the target cell. Option 1-3 may be applied in combination with option 1-1. For example, when the UE receives cell switch indication not including information about timing advance of a target cell, the UE may apply option 1-1 when having a stored/maintained TA of the target cell while applying option 1-3 when having no stored/maintained TA of the target cell.

### {Option 1-4}

When the UE receives cell switch indication not including information about timing advance of a target cell, the UE may perform control not to apply TA to the target cell. When the UE receives cell switch indication not including information about timing advance of a target cell, the UE may perform control not to perform cell switching itself to the target cell.

Option 1-4 may be applied to a case where, at the time of receiving cell switch indication not including information about timing advance of a target cell, the UE has no stored/maintained TA of the target cell. Option 1-4 may be applied in combination with option 1-1. For example, when the UE receives cell switch indication not including information about timing advance of a target cell, the UE may apply option 1-1 when having a stored/maintained TA of the target cell while applying option 1-4 when having no stored/maintained TA of the target cell.

### {Option 1-5}

The UE may apply at least one of a TA of a candidate cell associated with a target cell (for example, a non-serving cell/serving cell other than the target cell or the like) and a TA of a TAG ID associated with the target cell.

Option 1-5 may be applied to a case where, at the time of receiving cell switch indication not including information about timing advance of a target cell, the UE has no stored/maintained TA of a target cell. Option 1-5 may be applied in combination with option 1-1. For example, when the UE receives cell switch indication not including information about timing advance of a target cell, the UE may apply option 1-1 when having a stored/maintained TA of the target cell while applying option 1-5 when having no stored/maintained TA of the target cell.

### {Option 1-6}

It may be configured that information about timing advance (for example, TAC field) is always included/present in cell switch indication (for example, a cell switch command MAC CE). The UE does not expect/assume to receive cell switch indication (for example, a cell switch command MAC CE) not including/with no presence of information about timing advance (for example, TAC field).

At least one of option 1-1 to option 1-6 may be applied to case A/case B/case C/case D below.

### {Case A}

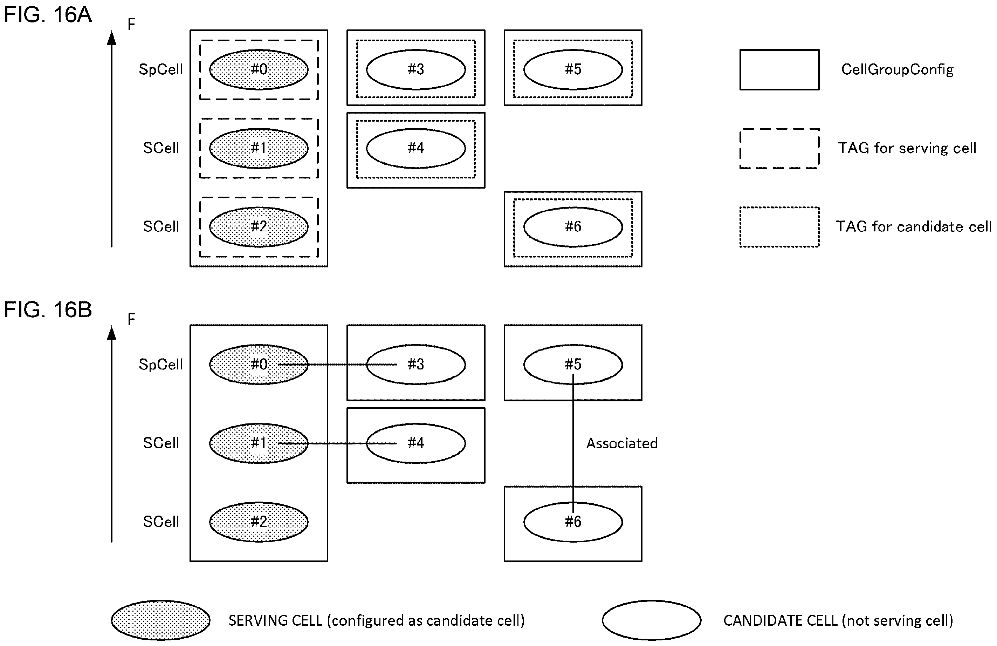

Case A corresponds to a case where TAG IDs between cell group configurations (for example, CellGroupConfig) are not configured by a higher layer (see FIG. 16A). In the present disclosure, "between cell group configurations" may be interpreted as "between cell groups."

FIG. 16A shows a case where serving cells #0, #1, and #2 belong to the same cell group (or configured by the same cell group configuration (for example, CellGroupConfig)), and candidate cells #3, #4, #5, and #6 belong to respective other cell groups (or configured by different cell group configurations (for example, CellGroupConfig)). FIG. 16A also shows a case where serving cells #0, #1, and #2 belong to respective TAGs for serving cell, while candidate cells #3, #4, #5, and #6 belong to respective TAGs for candidate cell.

In other words, no same TAG ID is configured between different cell group configurations (or different cell groups).

In case A, at least one of option 1-1/option 1-2/option 1-3/option 1-4/option 1-6 above (for example, individually or in combination) may be applied.

For example, when the UE receives a cell switch command (for example, a MAC CE) indicating switch between current serving cell #0 and candidate cell #3 (target cell), and information about timing advance (for example, a TAC field) is not present in the cell switch command, at least one of option 1-1/option 1-2/option 1-3/option 1-4 (individually or in combination) may be applied.

In a case where, at the time of receiving a cell switch command, the UE has a stored/maintained TA of the target cell (for example, candidate cell #3) acquired/measured before the cell switch command, the UE may apply the TA in UL transmission after cell switch (option 1-1).

The UE may trigger/execute TA acquisition/measurement for the target cell (for example, candidate cell #3) (option 1-2). In this case, the UE may apply a TA acquisition method/measurement method configured in a higher layer or defined in a specification, to the target cell (for example, candidate cell #3). In a case where, at the time of receiving a cell switch command, the UE has a stored/maintained TA of the target cell (for example, candidate cell #3) acquired/measured before the cell switch command, the UE may apply the TA. When the UE has no stored/maintained TA of the target cell (for example, candidate cell #3), the UE may trigger/execute TA acquisition/measurement for the target cell (for example, candidate cell #3).

The UE may apply a certain value (for example, 0) or a TA of the serving cell (for example, serving cell #0) to a TA of UL transmission for the target cell (for example, candidate cell #3) after cell change (option 1-3).

### {Case B}

Case B corresponds to a case where TA association between candidate cells (for example, TA association across candidate cells) is configured/indicated by RRC/MAC CE (see FIG. 16B). A network (for example, a base station) may configure which candidate cells share the same TA.

FIG. 16B shows a case where serving cells #0, #1, and #2 belong to the same cell group (or configured by the same cell group configuration (for example, CellGroupConfig)), and candidate cells #3, #4, #5, and #6 belong to respective other cell groups (or configured by different cell group configurations (for example, CellGroupConfig)). FIG. 16B also shows a case where the TA of serving cell #0 and the TA of candidate cell #3 are associated (or serving cell #0 and candidate cell #3 have the same TA), the TA of serving cell #1 and the TA of candidate cell #4 are associated (or serving cell #1 and candidate cell #4 have the same TA), and the TA of candidate cell #5 and the TA of candidate cell #6 are associated (or candidate cell #5 and candidate cell #6 have the same TA). Note that the TA association shown in FIG. 16B is an example and is not restrictive.

In other words, the same TA may be shared/associated between a serving cell and a candidate cell or between a plurality of candidate cells.

In case B, at least one of option 1-1/option 1-2/option 1-3/option 1-4/option 1-5/option 1-6 above (for example, individually or in combination) may be applied.

For example, when the UE receives a cell switch command (for example, a MAC CE) indicating switch between current serving cell #0 and candidate cell #3 (target cell), and information about timing advance (for example, a TAC field) is not present in the cell switch command, option 1-1/option 1-2/option 1-3/option 1-4/option 1-5 (individually or in combination) may be applied.

In a case where, at the time of receiving a cell switch command, the UE has a stored/maintained TA of the target cell (for example, candidate cell #3) acquired/measured before the cell switch command, the UE may apply the TA in UL transmission after cell switch (option 1-1).

The UE may trigger/execute TA acquisition/measurement for the target cell (for example, candidate cell #3) (option 1-2). In this case, the UE may apply a TA acquisition method/measurement method configured in a higher layer or defined in a specification, to the target cell (for example, candidate cell #3). In a case where, at the time of receiving a cell switch command, the UE has a stored/maintained TA of the target cell (for example, candidate cell #3) acquired/measured before the cell switch command, the UE may apply the TA. When the UE has no stored/maintained TA of the target cell (for example, candidate cell #3), the UE may trigger/execute TA acquisition/measurement for the target cell (for example, candidate cell #3).

The UE may apply a certain value or a TA of the serving cell (for example, serving cell #0) to a TA of UL transmission for the target cell (for example, candidate cell #3) after cell change (option 1-3).

The UE may apply the TA of the candidate cell (for example, serving cell #0) associated with the target cell (for example, candidate cell #3) (option 1-5).

### {Case C}

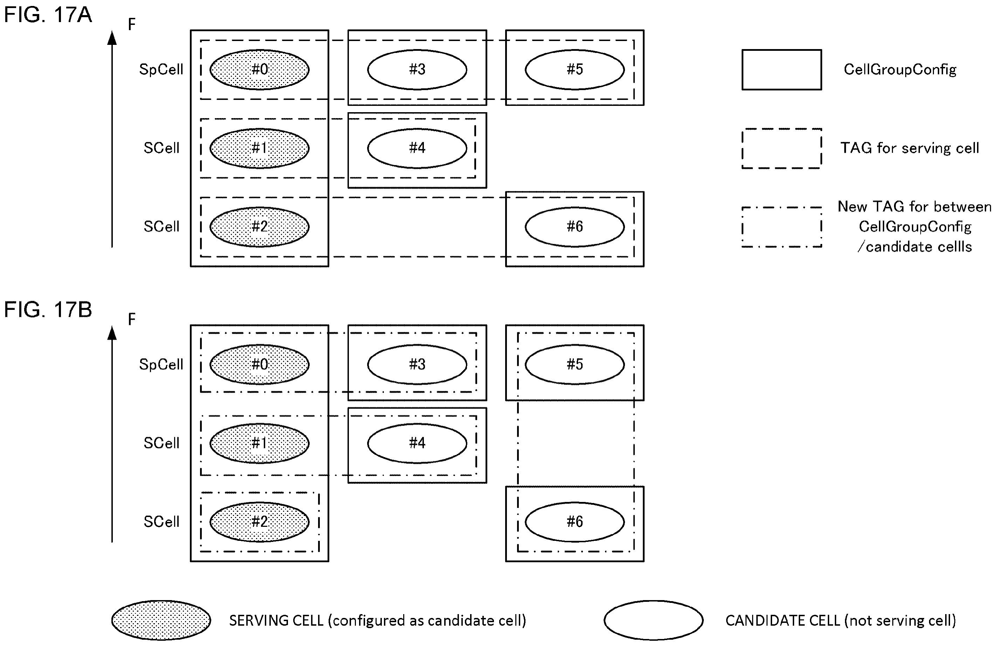

Case C corresponds to a case where it is supported to configure a TAG for candidate cell in association with the TAG for a current serving cell while a new TAG without a serving cell (for example, a TAG to which only a candidate cell(s) being a non-serving cell(s) belong) is not configured (see FIG. 17A).

FIG. 17A shows a case where serving cells #0, #1, and #2 belong to the same cell group (or configured by the same cell group configuration (for example, CellGroupConfig)), and candidate cells #3, #4, #5, and #6 belong to respective other cell groups (or configured by different cell group configurations (for example, CellGroupConfig)). FIG. 17A also shows a case where serving cell #0, candidate cell #3, and candidate cell #5 belong to the same TAG (or candidate cell #3 and candidate cell #5 belong to the TAG of serving cell #0), serving cell #1 and candidate cell #4 belong to the same TAG (or candidate cell #4 belongs to the TAG of serving cell #1), and serving cell #2 and candidate cell #6 belong to the same TAG (or candidate cell #6 belongs to the TAG of serving cell #2). Note that the TAG configurations shown in FIG. 17A are examples and are not restrictive. For example, although Fig. 17A shows a case where a serving cell and a candidate cell having the same frequency belong to the same TAG, this is not restrictive.

In other words, in case C, it is supported that a serving cell and a candidate cell are associated with the same TAG, and a TAG to which no serving cell belongs (for example, a TAG to which only a candidate cell(s) belongs) is not configured.

In case C, at least one of option 1-1/option 1-2/option 1-3/option 1-4/option 1-5 above (for example, individually or in combination) may be applied.

For example, when the UE receives a cell switch command (for example, a MAC CE) indicating switch between current serving cell #0 and candidate cell #3 (target cell), and information about timing advance (for example, a TAC field) is not present in the cell switch command, option 1-1/option 1-2/option 1-3/option 1-4/option 1-5 (individually or in combination) may be applied.

In a case where, at the time of receiving a cell switch command, the UE has a stored/maintained TA of the target cell (for example, candidate cell #3) acquired/measured before the cell switch command, the UE may apply the TA in UL transmission after cell switch (option 1-1).

The UE may trigger/execute TA acquisition/measurement for the target cell (for example, candidate cell #3) (option 1-2). In this case, the UE may apply a TA acquisition method/measurement method configured in a higher layer or defined in a specification, to the target cell (for example, candidate cell #3). In a case where, at the time of receiving a cell switch command, the UE has a stored/maintained TA of the target cell (for example, candidate cell #3) acquired/measured before the cell switch command, the UE may apply the TA. When the UE has no stored/maintained TA of the target cell (for example, candidate cell #3), the UE may trigger/execute TA acquisition/measurement for the target cell (for example, candidate cell #3).

The UE may apply a certain value or a TA of the serving cell (for example, serving cell #0) to a TA of UL transmission for the target cell (for example, candidate cell #3) after cell change (option 1-3).

The UE may apply the TA of the TAG ID (for example, the TAG ID to which serving cell #0 belongs) associated with the target cell (for example, candidate cell #3) (option 1-5).

### {Case D}

Case D corresponds to a case of supporting that TAG IDs between cell group configurations (for example, CellGroupConfig) are configured by a higher layer (see FIG. 17B). In this case, configuration of a new TAG with no serving cell (for example, a TAG to which only a candidate cell(s) being a non-serving cell(s) belongs) may be supported.

FIG. 17B shows a case where serving cells #0, #1, and #2 belong to the same cell group (or configured by the same cell group configuration (for example, CellGroupConfig)), and candidate cells #3, #4, #5, and #6 belong to respective other cell groups (or configured by different cell group configurations (for example, CellGroupConfig)). FIG. 17B also shows a case where serving cell #0 and candidate cell #3 belong to the same TAG (or a new TAG is configured for cell group configurations (for example, CellGroupConfig)), serving cell #1 and candidate cell #4 belong to the same TAG (or a new TAG is configured for cell group configurations (for example, CellGroupConfig)), and candidate cell #5 and candidate cell #6 belong to the same TAG (or a new TAG is configured for candidate cells). Note that the TAG configurations shown in FIG. 17B are examples and are not restrictive.

In other words, in case D, it is supported that a serving cell and a candidate cell are associated with the same TAG, and also permitted/supported that a TAG to which no serving cell belongs (for example, to which only a candidate cell(s) belongs) is configured.

In case D, at least one of option 1-1/option 1-2/option 1-3/option 1-4/option 1-5 above (for example, individually or in combination) may be applied.

For example, when the UE receives a cell switch command (for example, a MAC CE) indicating switch between current serving cell #0 and candidate cell #3 (target cell), and information about timing advance (for example, a TAC field) is not present in the cell switch command, option 1-1/option 1-2/option 1-3/option 1-4/option 1-5 (individually or in combination) may be applied.

In a case where, at the time of receiving a cell switch command, the UE has a stored/maintained TA of the target cell (for example, candidate cell #3) acquired/measured before the cell switch command, the UE may apply the TA in UL transmission after cell switch (option 1-1).

The UE may trigger/execute TA acquisition/measurement for the target cell (for example, candidate cell #3) (option 1-2). In this case, the UE may apply a TA acquisition method/measurement method configured in a higher layer or defined in a specification, to the target cell (for example, candidate cell #3). In a case where, at the time of receiving a cell switch command, the UE has a stored/maintained TA of the target cell (for example, candidate cell #3) acquired/measured before the cell switch command, the UE may apply the TA. When the UE has no stored/maintained TA of the target cell (for example, candidate cell #3), the UE may trigger/execute TA acquisition/measurement for the target cell (for example, candidate cell #3).

The UE may apply a certain value or a TA of the serving cell (for example, serving cell #0) to a TA of UL transmission for the target cell (for example, candidate cell #3) after cell change (option 1-3).

The UE may apply the TA of the TAG ID (for example, the TAG ID to which serving cell #0 belongs) associated with the target cell (for example, candidate cell #3) (option 1-5).

Thus, as described in the first embodiment, by applying a certain option in each of cases A to D, even when cell switch indication does not include information about the TA of a target cell, a TA to be applied to the target cell (or to be applied after cell switch) can be appropriately determined.

### <Second Embodiment>

A second embodiment relates to association between candidate cells (serving cell/non-serving cell/target cell) in TA application. The second embodiment may be applied in combination with the first embodiment.

For example, in FIG. 15, at least one of a higher layer parameter transmitted before cell switch indication (for example, a higher layer parameter about an LTM candidate configuration (for example, LTM-CandidateConfig), another higher layer parameter, or the like), any MAC CE, and a MAC CE included in the cell switch indication may be used to configure/indicate association between candidate cells.

As the association between candidate cells, at least one of option 2-1 to option 2-14 below may be applied.

Option 2-1 may preferably be applied in case A described in the first embodiment. At least one of option 2-2 to option 2-5 may preferably be applied in case B described in the first embodiment. At least one of option 2-6 to option 2-10 may preferably be applied in case C described in the first embodiment. At least one of option 2-11 and option 2-12 may preferably be applied in case D described in the first embodiment. As a matter of course, options applicable to each case are not limited to these.

### {Option 2-1}

A different TAG configuration per candidate cell (different TAG-Config per candidate cell) may be configured for each higher layer parameter about MAC cell group configuration (for example, MAC-CellGroupConfig).

### {Option 2-2}

Identification of candidate cells having the same TA may be indicated by a MAC CE. The identification of candidate cells may be indicated by a corresponding bit(s) in the MAC CE.

The MAC CE may be any MAC CE. For example, the MAC CE may be a MAC CE transmitted before cell switch indication (for example, a MAC CE included in a RAR in a RACH procedure or another MAC CE). Alternatively, the MAC CE may be a MAC CE included in the cell switch indication.

### {Option 2-3}

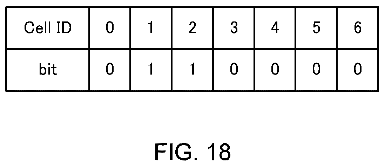

Candidate cells having the same TA may be indicated by a bitmap of a MAC CE (see FIG. 18). FIG. 18 may mean that cell #1 and cell #2 having a given bit value (here, 1) have the same TA in a bitmap of a MAC CE.

The MAC CE may be any MAC CE. For example, the MAC CE may be a MAC CE transmitted before cell switch indication (for example, a MAC CE included in a RAR in a RACH procedure or another MAC CE). Alternatively, the MAC CE may be a MAC CE included in the cell switch indication.

### {Option 2-4}

Identification of candidate cells having the same TA may be configured as part of a configuration different from a candidate cell configuration. For example, when a candidate cell configuration is configured by higher layer parameters regarding LTM candidate cell configuration (for example, LTM-CandidateConfig), identification information of candidate cells having the same TA may be included in part of a configuration separate from (for example, separate higher layer parameters from) this LTM-CandidateConfig.

### {Option 2-5}

Identification of candidate cells having the same TA may be configured as part of a candidate cell configuration/for each candidate cell configuration. For example, when a candidate cell configuration is configured by higher layer parameters regarding LTM candidate cell configuration (for example, LTM-CandidateConfig), identification information of candidate cells having the same TA may be included in part of this LTM-CandidateConfig/for each LTM-CandidateConfig.

For example, in the case shown in FIG. 16B (for example, when serving cell #0 and candidate cell #3 have the same TA), serving cell #0 may be configured (or information on serving cell #0 may be included) in the candidate cell configuration (for example, LTM-CandidateConfig) of candidate cell #3. Serving cell #1 may be configured (or information on serving cell #1 may be included) in the candidate cell configuration (for example, LTM-CandidateConfig) of candidate cell #4. Candidate cell #6 may be configured (or information on candidate cell #6 may be included) in the candidate cell configuration (for example, LTM-CandidateConfig) of candidate cell #5.

### {Option 2-6}

When the TAG of a candidate cell is configured in association with the TAG of a current serving (or the serving cell and the candidate cell are associated with the same TAG), the TAG configuration (for example, TAG-Config) for the current serving cell may be used. In this case, an additional TAG configuration (for example, Additional TAG-Config) need not be configured as part of an LTM candidate cell configuration (for example, LTM-CandidateConfig)/for each LTM candidate cell configuration.

### {Option 2-7}

When the TAG of a candidate cell is configured in association with the TAG of a current serving (or the serving cell and the candidate cell are associated), the same TAG configuration as that of the current serving cell may be configured independently as part of an LTM candidate cell configuration (for example, LTM-CandidateConfig)/for each LTM candidate cell configuration, in addition to the TAG configuration for candidate cell group.

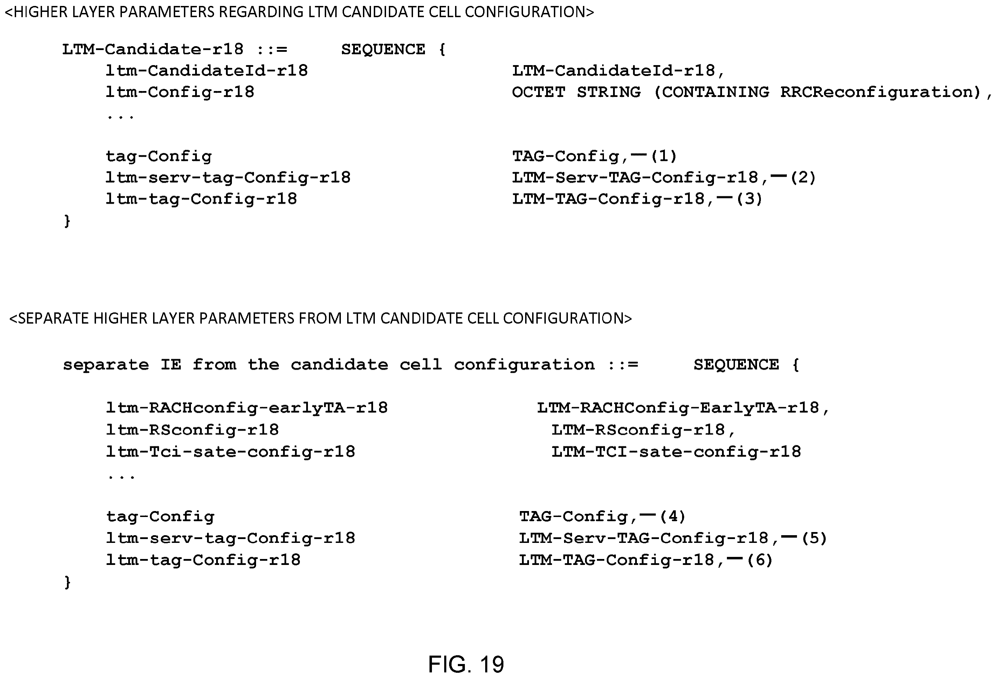

FIG. 19 shows an example of higher layer parameters/information elements included in an LTM candidate cell configuration and an example of separate higher layer parameters/information elements from the LTM candidate cell configuration. In option 2-7, in an LTM candidate cell configuration (for example, LTM-CandidateConfig), TAG configuration (2) (for example, LTM-Serv-TAG-Config-r18) the same as that of the current serving cell may be configured in addition to TAG configuration (1) (for example, TAG-Config) for a candidate cell group.

### {Option 2-8}

When the TAG of a candidate cell is configured in association with the TAG of a current serving (or the serving cell and the candidate cell are associated with the same TAG), the same TAG configuration as that of the current serving cell may be configured independently as part of a configuration different from an LTM candidate cell configuration (for example, LTM-CandidateConfig) in addition to the TAG configuration for the candidate cell group.

FIG. 19 shows an example of higher layer parameters/information elements included in an LTM candidate cell configuration and an example of separate higher layer parameters/information elements from the LTM candidate cell configuration. In option 2-8, in a configuration separate from an LTM candidate cell configuration (for example, LTM-CandidateConfig), TAG configuration (5) (for example, LTM-Serv-TAG-Config-r18) the same as that of the current serving cell may be configured in addition to TAG configuration (4) (for example, TAG-Config) for a candidate cell group.

### {Option 2-9}

When the TAG of a candidate cell is configured in association with the TAG of a current serving (or the serving cell and the candidate cell are associated with the same TAG), an LTM-specific new TAG configuration may be configured independently as part of an LTM candidate cell configuration (for example, LTM-CandidateConfig)/for each LTM candidate cell configuration, in addition to the TAG configuration for candidate cell group.

FIG. 19 shows an example of higher layer parameters/information elements included in an LTM candidate cell configuration and an example of separate higher layer parameters/information elements from the LTM candidate cell configuration. In option 2-9, in an LTM candidate cell configuration (for example, LTM-CandidateConfig), LTM-specific new TAG configuration (3) (for example, LTM-TAG-Config-r18) may be configured in addition to TAG configuration (1) (for example, TAG-Config) for a candidate cell group.

### {Option 2-10}

When the TAG of a candidate cell is configured in association with the TAG of a current serving (or the serving cell and the candidate cell are associated with the same TAG), an LTM-specific new TAG configuration may be configured independently as part of a configuration separate from an LTM candidate cell configuration (for example, LTM-CandidateConfig) in addition to the TAG configuration for a candidate cell group.

FIG. 19 shows an example of higher layer parameters/information elements included in an LTM candidate cell configuration and an example of separate higher layer parameters/information elements from the LTM candidate cell configuration. In option 2-10, in a configuration separate from an LTM candidate cell configuration (for example, LTM-CandidateConfig), LTM-specific new TAG configuration (6) (for example, LTM-TAG-Config-r18) may be configured in addition to TAG configuration (4) (for example, TAG-Config) for a candidate cell group.

### {Option 2-11}

When the TAG IDs of cell group configurations (for example, CellGroupConfig) can be configured by a higher layer (or when configuration of a TAG to which only a candidate cell(s) belongs is supported), an LTM-specific new TAG configuration may be configured independently as part of an LTM candidate cell configuration (for example, LTM-CandidateConfig)/for each LTM candidate cell configuration, in addition to the TAG configuration for candidate cell group.

FIG. 19 shows an example of higher layer parameters/information elements included in an LTM candidate cell configuration and an example of separate higher layer parameters/information elements from the LTM candidate cell configuration. In option 2-11, in an LTM candidate cell configuration (for example, LTM-CandidateConfig), LTM-specific new TAG configuration (3) (for example, LTM-TAG-Config-r18) may be configured in addition to TAG configuration (1) (for example, TAG-Config) for a candidate cell group.

### {Option 2-12}

When the TAG IDs of cell group configurations (for example, CellGroupConfig) can be configured by a higher layer (or when configuration of a TAG to which only a candidate cell(s) belongs is supported), an LTM-specific new TAG configuration may be configured independently as part of a configuration separate from an LTM candidate cell configuration (for example, LTM-CandidateConfig), in addition to the TAG configuration for candidate cell group.

FIG. 19 shows an example of higher layer parameters/information elements included in an LTM candidate cell configuration and an example of separate higher layer parameters/information elements from the LTM candidate cell configuration. In option 2-12, in a configuration separate from an LTM candidate cell configuration (for example, LTM-CandidateConfig), LTM-specific new TAG configuration (6) (for example, LTM-TAG-Config-r18) may be configured in addition to TAG configuration (4) (for example, TAG-Config) for a candidate cell group.

For option 2-1/2-6/2-7/2-8/2-9/2-10/2-11/2-12, when a TAG configuration (TAG-Config)/LTM-specific new TAG configuration is configured, at least one of a configuration (option 2-A) that a TAG ID (TAG-Id) is configured for each serving cell configuration (for example, ServingCellConfig) and a configuration (option 2-B) that a TAG ID (TAG-Id) is configured for each LTM candidate configuration (for example, LTM-CandidateConfig) may be applied.

### {Option 2-13}

When no association between candidate cells is provided by RRC signaling before transmission/before reception of cell switch indication (for example, cell switch command), a network (for example, a base station) may indicate the index of another cell (for example, candidate cell) having a TA to be applied to a target cell. In the present disclosure, association between candidate cells may mean candidate cells sharing the same TA (or that candidate cells share the same TA) or candidate cells belonging to the same TAG (or that candidate cells belong to the same TAG).

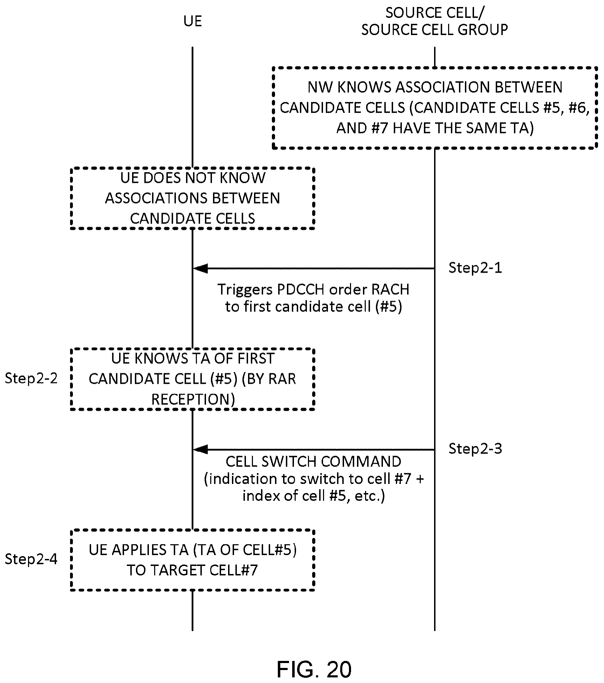

In other words, when no association between candidate cells is provided before transmission of cell switch indication (for example, a cell switch command), the network may include information about the index of the other cell (for example, candidate cell) in the cell switch indication (for example, the cell switch command) (see FIG. 20). A UE may perform control to apply the TA of the other cell indicated by the cell switch indication, to the target cell.

FIG. 20 shows an example of a case where the index of another candidate cell (for example, a serving cell/non-serving cell), which is different from a target cell is indicated by cell switch indication.

Assumed is a case where a network knows association between candidate cells (for example, that candidate cells #5, #6, and #7 share the same TA) while a UE does not know association between the candidate cells. For example, when the network triggers a PDCCH ordered RACH for a first candidate cell (for example, candidate cell #5) (Step 2-1), the UE can know the TA of first candidate cell #5 by the RACH procedure (for example, RAR reception) (Step 2-2).

Thereafter, when the network indicates cell switch to a second candidate cell (for example, candidate cell #7) (Step 2-3), the index of another candidate cell (for example, first candidate cell #5), which is different from second candidate cell #7 being a target, may be included in cell switch indication (for example, a cell switch command). In this case, the UE may determine to apply the TA of the other candidate cell (for example, first candidate cell #5) to second candidate cell #7 to be the target cell (for example, candidate cell #7) (Step 2-4).

Thus, even when cell switch indication does not include information about the TA of a target cell, a TA to be applied to the target cell (or another cell associated with the target cell) can be appropriately determined.

### {Option 2-14}

When no association between candidate cells is provided by RRC signaling before transmission/before reception of cell switch indication (for example, a cell switch command), a network (for example, a base station) may indicate a TAG ID with a TA to be applied to a target cell.

In other words, when no association between candidate cells is provided before transmission of cell switch indication (for example, a cell switch command), the network may include information about the TAG ID in the cell switch indication (for example, the cell switch command). A UE may perform control to apply the TA of the TAG ID indicated by the cell switch indication, to the target cell.

Option 2-14 may preferably be applied to a case where a TA to be applied to a target cell is the TA of a serving cell.

### {LTM-specific New TAG Configuration}

In option 2-1 to option 2-14, at least one of option 2A-1 to option 2A-3 below may be applied to an LTM-specific new TAG configuration (for example, LTM specific new TAG-Config).

### <<Option 2A-1>>

An LTM-specific new TAG configuration may include a TAG ID (for example, TAG-Id) and a time alignment timer, for a current serving cell.

### <<Option 2A-2>>

An LTM-specific new TAG configuration may include a TAG ID (for example, TAG-Id) and a time alignment timer, for one or a plurality of candidate cells.

### <<Option 2A-3>>

An LTM-specific new TAG configuration may include a TAG ID (for example, TAG-Id) and a time alignment timer, for a current serving cell and one or a plurality of candidate cells.

When an LTM-specific new TAG configuration (for example, LTM specific new TAG-Config) includes a TAG ID (for example, TAG-Id) and a time alignment timer, the maximum number of parameters may be configured/indicated by RRC/MAC CE/DCI, may be defined in a specification, or may be reported as UE capability information.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments (or the options of the embodiments) may be applied only to a UE that has reported a specific UE capability or that supports the specific UE capability.

The specific UE capability may indicate at least one of the following:
- supporting of specific processing/operation/control/information (for example, UE based TA measurement) for at least one of the embodiments above.
- supporting of specific processing/operation/control/information for at least one of the options of the embodiments above or a combination of the options.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information about the above-described embodiment (or performance of the operation of the above-described embodiment) by higher layer signaling/physical layer signaling. For example, the specific information may be information indicating enabling of a random access procedure/PRACH transmission without RAR monitoring, any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1-1}

A terminal including: a receiving section that receives cell switch indication information indicating switch to a target cell; and a control section that performs, when information about timing advance of the target cell is not included in the cell switch indication information, control to apply at least one of timing advance of the target cell acquired before reception of the cell switch indication information, timing advance acquired after the reception of the cell switch indication information, and timing advance of another cell different from the target cell.

### {Supplementary Note 1-2}

The terminal according to supplementary note 1-1, wherein, when the timing advance of the target cell acquired before the reception of the cell switch indication information is not held at the time of the reception of the cell switch indication information, the control section triggers acquisition or measurement of timing advance of the target cell.

### {Supplementary Note 1-3}

The terminal according to supplementary note 1-1 or 1-2, wherein, when association of timing advances between a plurality of candidate cells including the target cell is configured, the control section applies timing advance of another cell associated with the target cell.

### {Supplementary Note 1-4}

The terminal according to any one of supplementary notes 1-1 to 1-3, wherein, when a plurality of candidate cells including the target cell are configured in a same timing advance group, the control section applies timing advance of a timing advance group associated with the target cell.

### {Supplementary Note 2-1}

A terminal including: a receiving section that receives information about association between a plurality of candidate cells for at least one of timing advance and a timing advance group and cell switch indication information indicating switch to a target cell; and a control section that determines timing advance to apply to the target cell, based on the information about the association between the plurality of candidate cells, when information about timing advance of the target cell is not included in the cell switch indication information.

### {Supplementary Note 2-2}

The terminal according to supplementary note 2-1, wherein the information about the association between the plurality of candidate cells is indicated by at least one of Medium Access Control (MAC) transmitted in the cell switch indication information and a higher layer parameter regarding a candidate cell configuration.

### {Supplementary Note 2-3}

The terminal according to supplementary note 2-1 or 2-2, wherein the information about the association between the plurality of candidate cells is at least one of a timing advance group configuration for a candidate cell or a candidate cell group and a timing advance group configuration same as that of a current serving cell, included in a higher layer parameter regarding a candidate cell configuration or another higher layer parameter.

### {Supplementary Note 2-4}

The terminal according to any one of supplementary notes 2-1 to 2-3, wherein the information about the association between the plurality of candidate cells is at least one of a timing advance group configuration for a candidate cell or a candidate cell group and an L1L2-triggered mobility (LTM)-specific timing advance group configuration, included in a higher layer parameter regarding a candidate cell configuration or another higher layer parameter.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

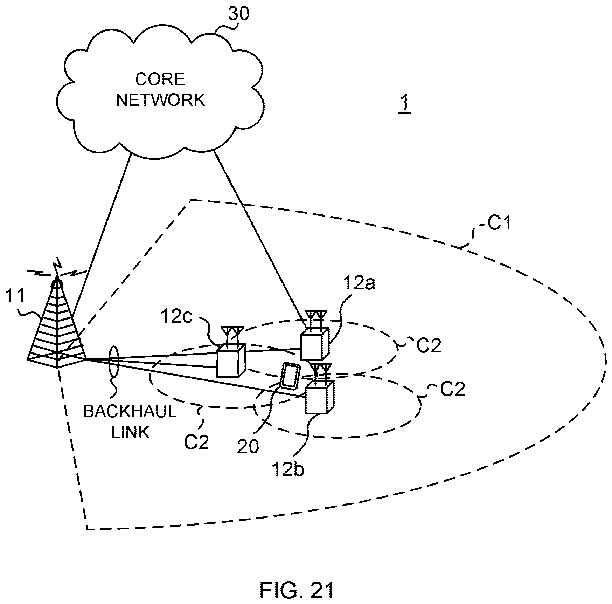

FIG. 21 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

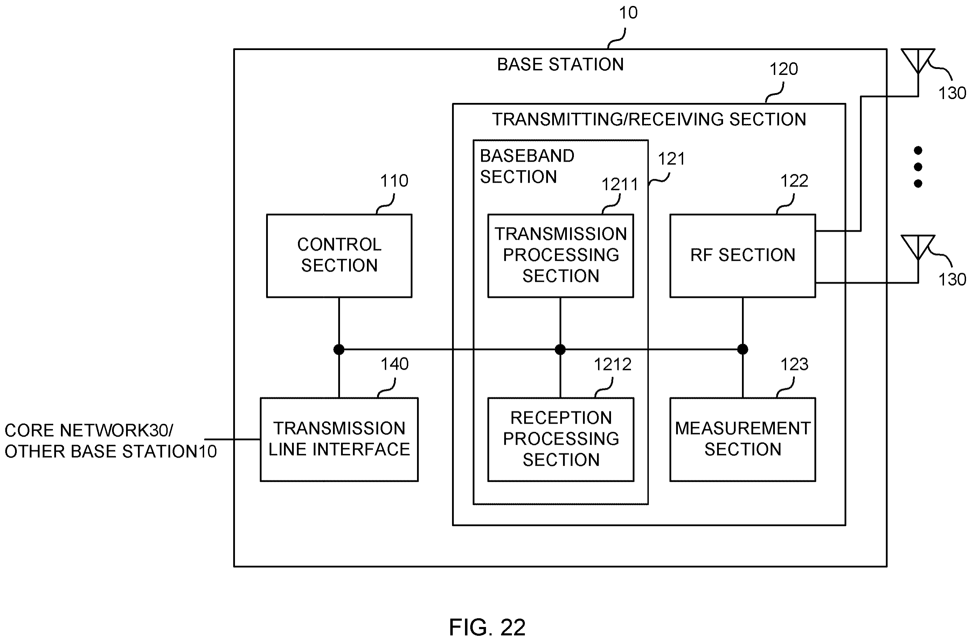

FIG. 22 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit cell switch indication information indicating switch to a target cell. The control section 110 may determine, when information about timing advance of the target cell is not included in the cell switch indication information, that at least one of timing advance of the target cell acquired before reception of the cell switch indication information, timing advance acquired after the reception of the cell switch indication information, and timing advance of another cell different from the target cell is applied.

The transmitting/receiving section 120 may transmit information about association between a plurality of candidate cells for at least one of timing advance and a timing advance group and cell switch indication information indicating switch to a target cell. The control section 110 may indicate timing advance to apply to the target cell, based on the information about the association between the plurality of candidate cells, when information about timing advance of the target cell is not included in the cell switch indication information.

### (User Terminal)

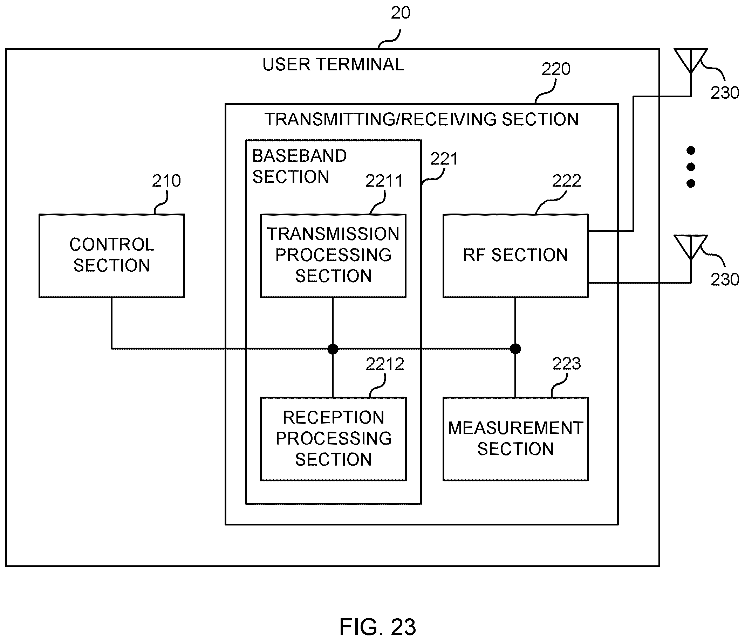

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive cell switch indication information indicating switch to a target cell. The control section 210 may control, when information about timing advance of the target cell is not included in the cell switch indication information, to apply at least one of timing advance of the target cell acquired before reception of the cell switch indication information, timing advance acquired after the reception of the cell switch indication information, and timing advance of another cell different from the target cell is applied.

When the timing advance of the target cell acquired before the reception of the cell switch indication information is not held at the time of the reception of the cell switch indication information, the control section 210 may trigger acquisition or measurement of timing advance of the target cell. When association of timing advances between a plurality of candidate cells including the target cell is configured, the control section 210 may apply timing advance of another cell associated with the target cell. A plurality of candidate cells including the target cell are configured in a same timing advance group, the control section 210 may apply timing advance of a timing advance group associated with the target cell.

The transmitting/receiving section 220 may receive information about association between a plurality of candidate cells for at least one of timing advance and a timing advance group and cell switch indication information indicating switch to a target cell. The control section 210 may determine timing advance to apply to the target cell, based on the information about the association between the plurality of candidate cells, when information about timing advance of the target cell is not included in the cell switch indication information.

The information about the association between the plurality of candidate cells may be indicated by at least one of Medium Access Control (MAC) transmitted in the cell switch indication information and a higher layer parameter regarding a candidate cell configuration. The information about the association between the plurality of candidate cells may be at least one of a timing advance group configuration for a candidate cell or a candidate cell group and a timing advance group configuration same as that of a current serving cell, included in a higher layer parameter regarding a candidate cell configuration or another higher layer parameter. The information about the association between the plurality of candidate cells may be at least one of a timing advance group configuration for a candidate cell or a candidate cell group and an L1L2-triggered mobility (LTM)-specific timing advance group configuration, included in a higher layer parameter regarding a candidate cell configuration or another higher layer parameter.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

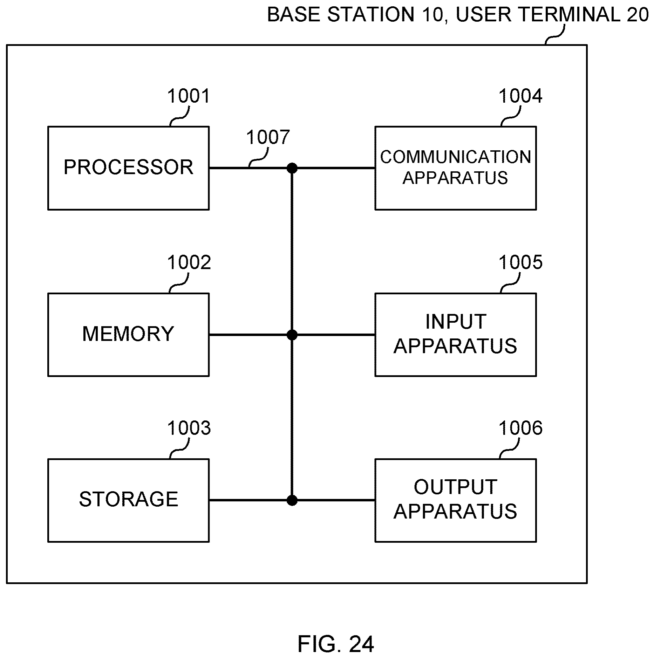

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware (these hardware).

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

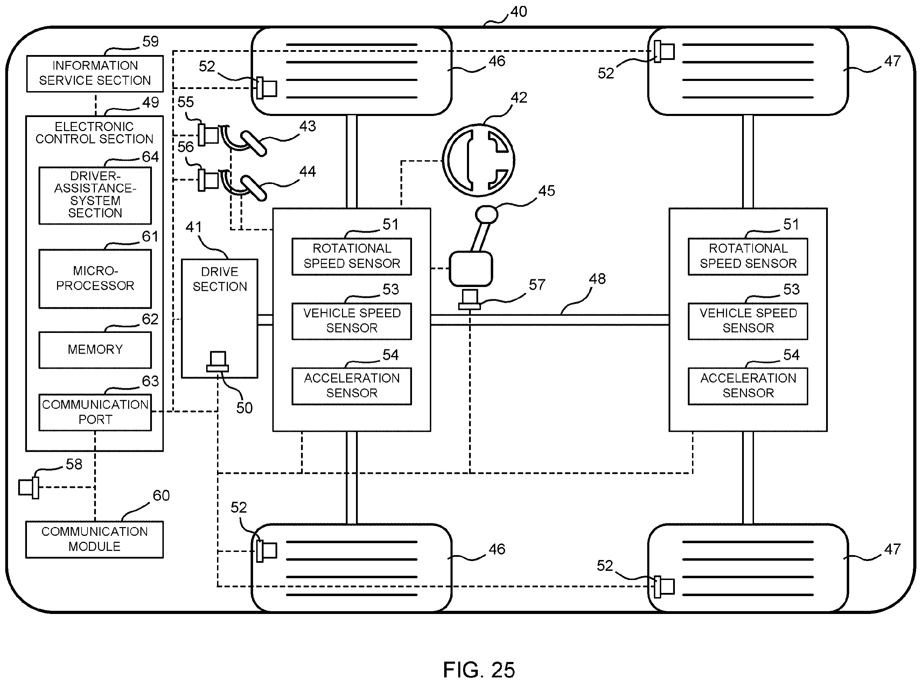

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information (various information) such as driving information, traffic information, and entertainment information, such as a car navigation system, an audio system, a speaker, a display, a television, and a radio; and one or more ECUs that control these devices. The information service section 59 provides various pieces of information/services (various information/services) (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information (the information) stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives cell switch indication information indicating switch to a target cell; and
a control section that performs, when information about timing advance of the target cell is not included in the cell switch indication information, control to apply at least one of timing advance of the target cell acquired before reception of the cell switch indication information, timing advance acquired after the reception of the cell switch indication information, and timing advance of another cell different from the target cell.

2. The terminal according to claim 1, wherein
when the timing advance of the target cell acquired before the reception of the cell switch indication information is not held at the time of the reception of the cell switch indication information, the control section triggers acquisition or measurement of timing advance of the target cell.

3. The terminal according to claim 1, wherein
when association of timing advances between a plurality of candidate cells including the target cell is configured, the control section applies timing advance of another cell associated with the target cell.

4. The terminal according to claim 1, wherein
when a plurality of candidate cells including the target cell are configured in a same timing advance group, the control section applies timing advance of a timing advance group associated with the target cell.

5. A radio communication method for a terminal, the radio communication method comprising:
receiving cell switch indication information indicating switch to a target cell; and
performing, when information about timing advance of the target cell is not included in the cell switch indication information, control to apply at least one of timing advance of the target cell acquired before reception of the cell switch indication information, timing advance acquired after the reception of the cell switch indication information, and timing advance of another cell different from the target cell.

6. A base station comprising:
a transmitting section that transmits cell switch indication information indicating switch to a target cell; and
a control section that determines, when information about timing advance of the target cell is not included in the cell switch indication information, that at least one of timing advance of the target cell acquired before reception of the cell switch indication information, timing advance acquired after the reception of the cell switch indication information, and timing advance of another cell different from the target cell is applied.
